(19) Europäisches Patentamt / European Patent Office / Office européen des brevets

(11) **EP 1 968 270 B1**

(12) **EUROPEAN PATENT SPECIFICATION**

(45) Date of publication and mention
of the grant of the patent:
**06.11.2019 Bulletin 2019/45**

(51) Int Cl.:
*H04L 27/34* (2006.01)  *H04L 1/24* (2006.01)
*H04L 1/00* (2006.01)  *H04L 1/20* (2006.01)

(21) Application number: **07253717.8**

(22) Date of filing: **19.09.2007**

(54) **Digital quality index for QAM digital signals**

Digitaler Qualitätsindex für QAM-Digitalsignale

Indice de qualité numérique pour signaux numériques QAM

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **12.10.2006 US 829181 P**

(43) Date of publication of application:
**10.09.2008 Bulletin 2008/37**

(60) Divisional application:
**19191501.6**

(73) Proprietor: **Viavi Solutions Inc.
San Jose, CA 95002 (US)**

(72) Inventors:
• **Massey, Gregory W.
Greenfield, IN 46140-8757 (US)**
• **Ramname, Reena
Fishers, IN 46038 (US)**
• **Oliver, Kevin J.
Fishers, IN 46038 (US)**

(74) Representative: **Murgitroyd & Company
Scotland House
165-169 Scotland Street
Glasgow G5 8PL (GB)**

(56) References cited:
JP-A- 2004 140 726    US-A1- 2002 069 038
US-A1- 2004 131 017

• **"DSAM-6000 Digital Service Analysis Meter Key
Features", , 16 March 2011 (2011-03-16),
XP055106107, Retrieved from the Internet:
URL:http://www.2wave.se/content/images/lis
t_626/104707_1356412471.pdf [retrieved on
2014-03-07]**
• **Anonymous: "JDSU Launches Sweep Feature to
the Triple-Play Digital Services Analysis Meter:
Unveils the DSAM-6000", , 2 February 2006
(2006-02-02), XP055106108, Retrieved from the
Internet:
URL:http://www.jdsu.com/News-and-Events/ne
ws-releases/Pages/jdsu-launches-sweep-feat
ure-to-the-triple-play-digital-services-an
alysis-meter-unveils-the-dsam-6000.aspx
[retrieved on 2014-03-07]**
• **DIGHAM F F ET AL: "Diversity combining with
discrete power loading over fading channels",
WIRELESS COMMUNICATIONS AND
NETWORKING CONFERENCE, 2004. WCNC.
2004 IE EE ATLANTA, GA, USA 21-25 MARCH
2004, PISCATAWAY, NJ, USA,IEEE, vol. 1, 21
March 2004 (2004-03-21), pages 328-332,
XP010708545, ISBN: 978-0-7803-8344-9**
• **PENG DAI ET AL: "A fast and efficient algorithm
for computing bandwidth requested mini-slots
over HFC", WIRELESS COMMUNICATIONS,
NETWORKING AND MOBILE COMPUTING, 2005.
PROCEE DINGS. 2005 INTERNATIONAL
CONFERENCE ON WUHAN, CHINA SEPT. 23-26,
2005, PISCATAWAY, NJ, USA,IEEE, vol. 1, 23
September 2005 (2005-09-23), pages 419-422,
XP010856174, DOI: 10.1109/WCNM.2005.1544071
ISBN: 978-0-7803-9335-6**

**Description**

**TECHNICAL FIELD**

The present invention relates to a system for calculating a digital quality index (DQI), which is a measure of the impairments in a received quadrature amplitude modulated (QAM) digital signal in a CATV cable system, and in particular to a DQI system used to detect impairments and quantify the results over a predetermined range.

**BACKGROUND OF THE INVENTION**

Digitally modulated signals are used to transport high-speed data, video and voice on cable networks. The high-speed signals are subject to a variety of impairments that can seriously impact the quality and reliability of the services being provided. Unfortunately, measuring the signal level or looking at the display on a conventional spectrum analyzer isn't enough to fully troubleshoot problems or characterize the health of a digitally modulated signal.

Delivery of data services over cable television systems is typically compliant with a data-over-cable-service-interface-specifications (DOCSIS) standard. The content of the digital signal is typically modulated using quadrature amplitude modulation (QAM). Current cable QAM standards use conventional forward error correction (FEC) and interleaving techniques to transmit the data downstream. FEC is a system of error control for data transmission in which the receiving device detects and corrects fewer than a predetermined number or fraction of bits or symbols corrupted by transmission errors. FEC is accomplished by adding redundancy to the transmitted information using a predetermined algorithm. However, impairments that exceed the correction capability or the burst protection capacity of the interleaving will not be corrected, and the digital data will be corrupted. Accordingly, technicians need to be able to detect impairments above and below the threshold at which digital signals are corrupted to be able to detect current and potential problems.

As with all modulation schemes, QAM conveys data by changing some aspect of a carrier signal, or the carrier wave, which is usually a sinusoid, in response to a data signal. In the case of QAM, the amplitude of two waves, 90° out-of-phase with each other, i.e.in quadrature, are changed, e.g. modulated or keyed, to represent the data signal.

When transmitting two signals by modulating them with QAM, the transmitted signal will be of the form:

$$s(t) = I(t)\cos(2\pi f_0 t) + Q(t)\sin(2\pi f_0 t)$$

where $I(t)$ and $Q(t)$ are the modulating signals and $f_0$ is the carrier frequency.

At the receiver, the two modulating signals can be demodulated using a coherent demodulator, which multiplies the received signal separately with both a cosine and sine signal to produce the received estimates of $I(t)$ and $Q(t)$, respectively. Due to the orthogonality property of the carrier signals, it is possible to detect the modulating signals independently.

In the ideal case $I(t)$ is demodulated by multiplying the transmitted signal with a cosine signal:

$$r_i(t) = s(t)\cos(2\pi f_0 t)$$
$$= I(t)\cos(2\pi f_0 t)\cos(2\pi f_0 t) + Q(t)\sin(2\pi f_0 t)\cos(2\pi f_0 t)$$

Using standard trigonometric identities:

$$r_i(t) = \frac{1}{2}I(t)[1 + \cos(4\pi f_0 t)] + \frac{1}{2}Q(t)\sin(4\pi f_0 t)$$
$$= \frac{1}{2}I(t) + \frac{1}{2}[I(t)\cos(4\pi f_0 t) + Q(t)\sin(4\pi f_0 t)]$$

Low-pass filtering $r_i(t)$ removes the high frequency terms, i.e. containing $(4\pi f_0 t)$, leaving only the $I(t)$ term, unaffected by $Q(t)$. Similarly, we may multiply $s(t)$ by a sine wave and then low-pass filter to extract $Q(t)$.

A constellation diagram is a representation of a signal modulated by a digital modulation scheme, such as quadrature amplitude modulation or phase-shift keying. The constellation diagram displays the signal as a two-dimensional scatter diagram in the complex plane at symbol sampling instants, i.e. the constellation diagram represents the possible symbols that may be selected by a given modulation scheme as points in the complex plane. Measured constellation diagrams can be used to recognize the type of interference and distortion in a signal.

By representing a transmitted symbol as a complex number and modulating a cosine and sine carrier signal with the real and imaginary parts, respectively, the symbol can be sent with two carriers, referred to as quadrature carriers, on the same frequency. A coherent detector is able to independently demodulate the two carriers. The principle of using two independently modulated carriers is the foundation of quadrature modulation.

As the symbols are represented as complex numbers, they can be visualized as points on the complex plane. The real and imaginary axes are often called the *in phase,* or I-axis and the *quadrature,* or Q-axis. Plotting several symbols in a scatter diagram produces the constellation diagram. The points on a constellation diagram are called *constellation points,* which are a set of *modulation symbols* that comprise the *modulation alphabet.*

In QAM, the constellation points are usually arranged in a square grid with equal vertical and horizontal spacing, although other configurations are possible. The most common forms are 16-QAM, 64-QAM, 128-QAM and 256-QAM. By moving to a higher-order constellation, it is possible to transmit more bits per symbol; however, if the mean energy of the constellation remains the same, in order to make a fair comparison, the points must be closer together and are thus more susceptible to noise and other corruption, i.e. a higher bit error rate. Accordingly, a higher-order QAM will deliver more data less reliably than a lower-order QAM. 64-QAM and 256-QAM are often used in digital cable television and cable modem applications. In the United States, 64-QAM and 256-QAM are the mandated modulation schemes for digital cable as standardised by the SCTE in the standard ANSI/SCTE 07 2000.

A typical QAM analyzer design includes a user interface, e.g. a keypad and a display, and possibly an Ethernet or other external connection for connection to a personal computer. A tuner is used to select a digitally modulated signal of interest, and a QAM demodulator provides several elements indicative of the received signal, such as carrier frequency acquisition, carrier phase tracking, symbol rate tracking, adaptive equalizer, and J.83 channel decoding. By probing into the elements of the QAM demodulator one can retrieve information on MER, pre- and post-FEC BER, and channel response, which is part of physical layer testing.

To troubleshoot a subscriber's premises with a signal problem, a technician will travel to the premises or a hub nearby, and conduct a variety of tests on the digitally modulated signal, e.g. RF level, MER, pre- and post-FEC BER, and an evaluation of the constellation for impairments. In addition, the technician may look at the equalizer graph for evidence of micro-reflections, and check in-channel frequency response and group delay. Moreover, if the QAM analyser is able, the measurements are repeated in the upstream direction. Unfortunately, all of the test results require a certain degree of experience, knowledge and skill to interpret, potentially resulting in differing explanations for the problem depending on the technician. BER measurements require that the test instrument have the capability to fully decode the digital signal, and require long sampling time to detect low bit error rates. Furthermore, post-FEC BER shows only the impairments the exceed the correction capability of the FEC and interleaving.

United States Patent Applications Nos. 2005/0144648 published June 30, 2005 in the name of Gotwals et al; 2005/0281200 published December 22, 2005 to Terreault; 2005/0286436 published December 29, 2005 to Flask; and 2005/0286486 published December 29, 2005 to Miller disclose conventional cable signal testing devices. The DSAM-6000, a digital service analysis meter launch in February 2006, is capable of determining and displayed pre- and post-FEC BER, as described in "DSAM-6000 Digital Service Analysis Meter Key Features", JDS Uniphase, 2006. United States Patents Nos. 6,611,795 issued August 26, 2003 to Cooper, and 7,032,159 issued April 18, 2006 to Lusky et al, and United States Patent Application No. 2003/0179821 published September 25, 2003 to Lusky et al relate to error correcting methods. PCT Patent Publication No. WO 2006/085275 published August 17, 2006 to Moulsley et al relates to estimating the BER based on the sampled amplitude of the signal. United States Patent Application No. 2004/0131017 published July 8, 2004 to Penther discloses using received modulation accuracy (RMA), the inverse of error vector magnitude (EVM), to predict the bit error rate (BER) of a transmission in order to choose a physical layer mode. United States Patent Application No. 2002/069038 published June 6, 2002 to Cooper discloses using the maximum allowable BER for a particular modulation type to select an EVM threshold for detecting noise bursts.

An object of the present invention is to overcome the shortcomings of the prior art by providing a fast and sensitive measurement of impairments on a QAM digital channel without requiring full decode capability of the QAM signal, and without requiring a vase amount of expertise.

## SUMMARY OF THE INVENTION

Accordingly, there is provided a method of determining an indication of the quality on a QAM digital signal on a cable network with forward error correction, as set out in claim 1.

There is also provided a testing device for generating an indication of the quality of a quadrature amplitude modulated digital signal on a cable network with forward error correction, as set out in claim 3.

Independent claims 1 and 3 define the scope of protection of the invention.

## BRIEF DESCRIPTION OF THE DRAWINGS

The invention will be described in greater detail with reference to the accompanying drawings which represent preferred embodiments thereof, wherein:

Figure 1 is a schematic representation of the testing device of the present invention;

Figure 2 is a schematic representation of the subsystems of the testing device of the present invention;

Figure 3 is a schematic representation of a statistical model for approximating bit error rate prior to and after forward error correcting;

Figure 4 is a plot of BER prior to FEC vs Error Voltage ($V_{ERR}$) for the statistical model of Fig. 3;

Figure 5 is a plot of BER prior to FEC vs BER after FEC for the statistical model of Fig. 3;

Figure 6 is a schematic representation of an alternate embodiment of a statistical model for approximating bit error rate prior to and after forward error correcting;

Figure 7 is a schematic representation of a I-Q corner analyser of the statistical model of Fig. 6;

Figure 8 are constellation diagrams for 64, 128, 256 QAM signals illustrating the corner and middle squares;

Figure 9a is a flow chart for determining the DQI in accordance with BER prior to and after FEC;

Figure 9b is an alternative flow chart for determining the DQI in accordance with BER prior to and after FEC;

Figure 10 is an alternative flow chart for determining the DQI in accordance with BER prior to and after FEC;

Figure 11 is a chart representative of the DQI in relation to BER prior to and after the FEC; and

Figure 12 is an alternative flow chart for determining an enhanced DQI in accordance with level measurements and adaptive equalizer tap values.

## DETAILED DESCRIPTION

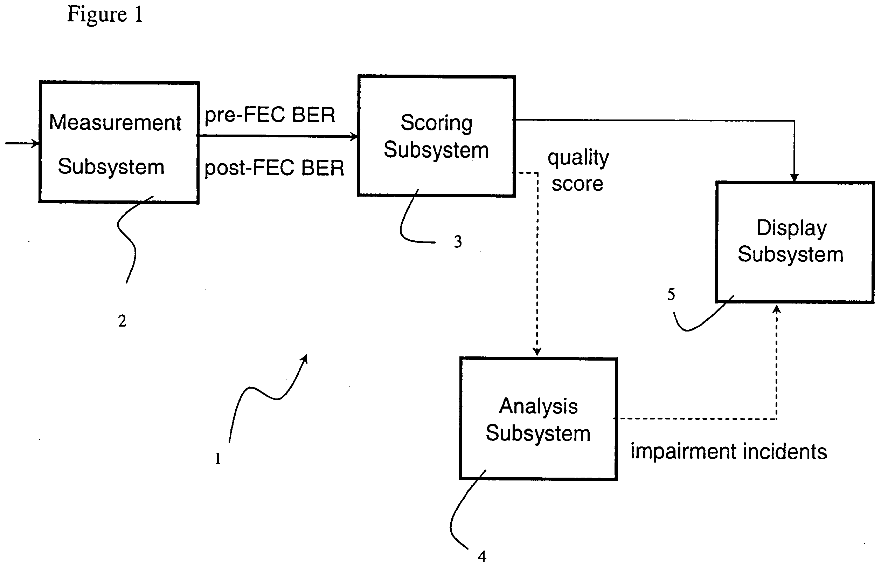

With reference to Figure 1, the DQI testing device 1 of the present invention includes four subsystems: a receiver and measurement subsystem 2 for receiving a quadrature amplitude modulated (QAM) signal and for determining bit error rates prior to and after forward error correction, a scoring subsystem 3 for generating a digital quality index (DQI) number on a predetermined scale, e.g. 0 to 10, based on the aforementioned bit error rates, an analysis subsystem 4 for analyzing the determined information, and a display subsystem 5 for relating the DQI number and any addition information to the technician utilizing the testing device 1.

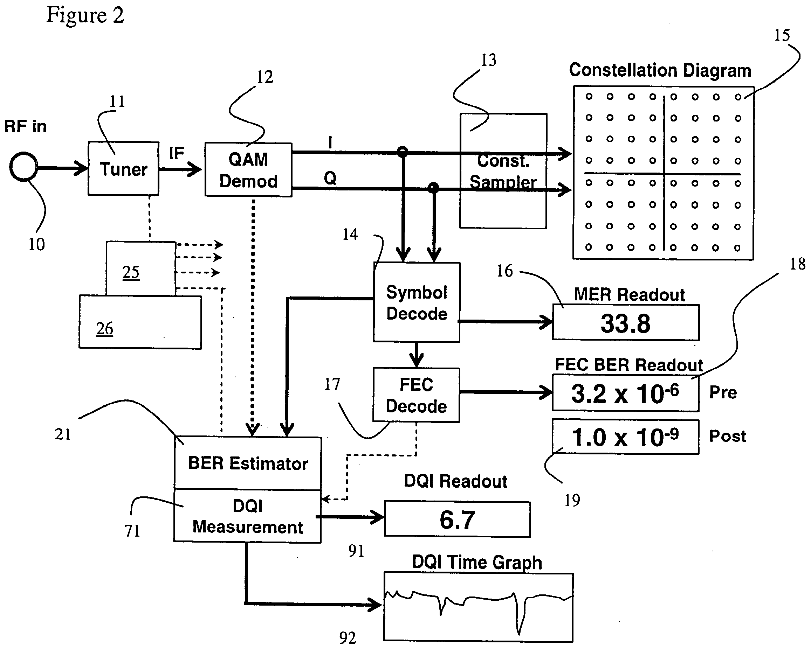

With reference to Figure 2, the receiver and measurement subsystem 2 includes an input port 10 for receiving the QAM digital signal from a cable network, a tuner 11 for selecting a desired cable channel to test, and a QAM demodulator 12 for demodulating the QAM signal into I and Q signals. In a full service testing device, the I and Q signals are transmitted to a constellation sampler 13 and a symbol decoder 14, which decodes the digital signal into a decoded signal. The constellation sampler 13 generates a constellation diagram 15. The symbol decoder 14 determines the modulation error ratio (MER) for display at readout 16, and transmits the decoded signal to a forward error correction (FEC) decoder 17. The FEC decoder 17 performs error correction on the decoded signal, and determines a bit error rate (BER) before and after the error correction for display at readouts 18 and 19, respectively.

The QAM demodulator 12 also provides a QAM decode error voltage ($V_{ERR}$), which can be used to compute the Modulation Error Rate (MER), an estimate of the signal to noise ratio (SNR) of the digital signal, to a bit error rate (BER) calculator 21 to convert the $V_{ERR}$ to a bit error rate (BER). The $V_{ERR}$ value from the QAM demodulator 12 is multiplied by different scale factors depending on the QAM modulation of the signal, for example:

| Scale Factors | Annex A | Annex B |
|---|---|---|
| 64 QAM | 0.67 | 0.50 |

(continued)

| Scale Factors | Annex A | Annex B |
|---|---|---|
| 128 QAM | 1.34 | N/A |
| 256 QAM | 1.32 | 1.00 |

$$MER(dB) = 20 \log_{10} (V_{REF} / V_{ERR})$$

$$EVM(dB) = 20 \log (V_{ERR} / V_{REF}), \text{ or } EVM(\%) = (V_{ERR} / V_{REF}) * 100\%$$

The reference voltage $V_{REF}$ is the RMS voltage of an ideal signal.

MER is commonly used in digital communications as an approximation of SNR or as a substitute for it. A true SNR measurement is difficult to perform on a digital signal. Accordingly, the term SNR analyzer is used for the subsystem that uses the filtered error voltages to get pre- and post-FEC BER estimates.

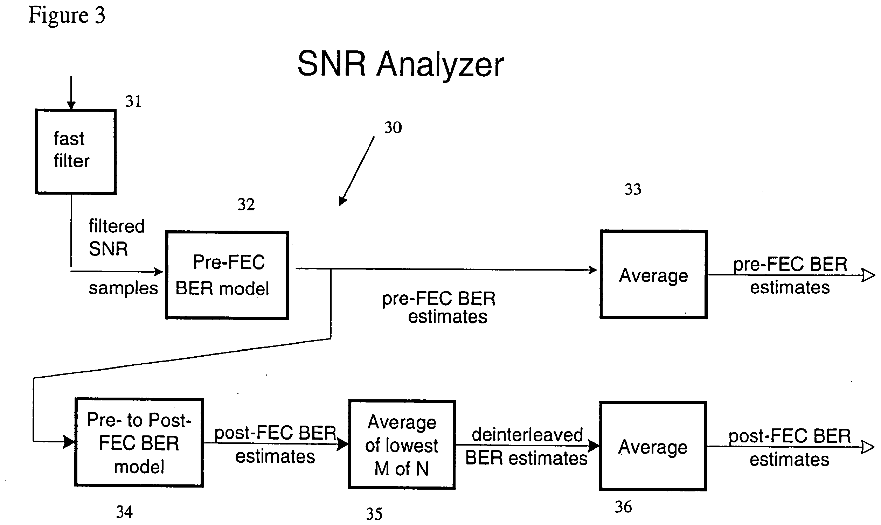

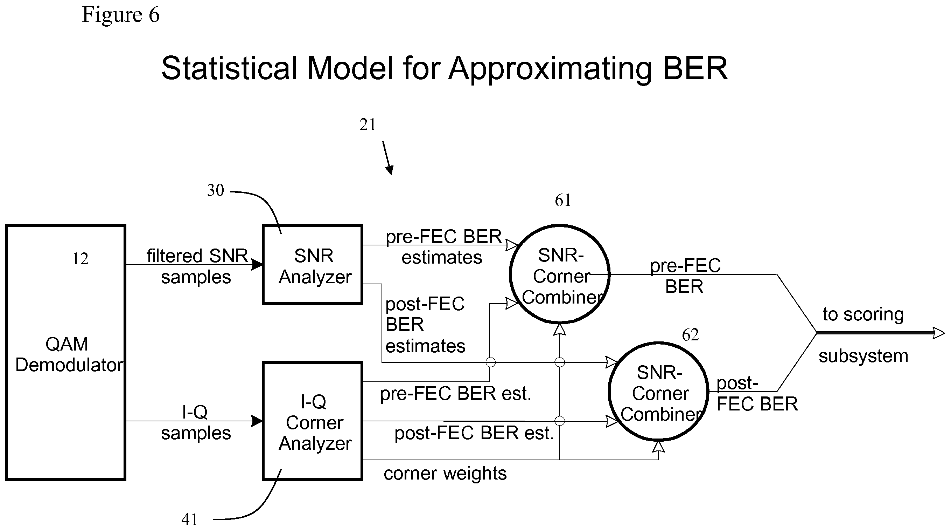

The scoring subsystem 3 can use the pre-FEC BER and the post-FEC BER determined from the FEC decoder 17, as shown by the which will necessitate that the digital signal be fully decoded, and a great deal of time to measure low BERs. Alternatively, the constellation sampler 13, the symbol decoder 14, the constellation diagram 15, the MER readout 16, and the FEC decoder 17 can be eliminated, and the BER calculator 21 can be used to estimate the pre-FEC BER and the post-FEC BER. The BER calculator 21 includes an SNR analyzer 30, illustrated in Figure 3 or, in a preferred embodiment, a combination of the SNR analyzer 30 with an I-Q corner analyzer 41, as in Figure 6. All of the aforementioned systems are under the control of a microcomputer 25 with a keyboard or graphical interface 26.

The SNR analyzer 30 receives filtered $V_{ERR}$ samples, e.g. from a fast filter 31, which is sampled once every 10 to 50 microseconds, and a pre-FEC BER prior to the forward error correction (FEC) is calculated at 32 in accordance with a predetermined statistical relationship between $V_{ERR}$ and pre-FEC BER. The average pre-FEC BER is determined at 33, and forwarded to the scoring subsystem 3 or combined with the pre-FEC BER provided by the I-Q corner analyzer 41, as hereinafter described. In order for the present invention to see narrow ingress pulses, the estimated $V_{ERR}$ must be sampled at a higher rate than would normally be used to measure MER. Hardware filtering, i.e. fast filter 31, is needed if the sample rate is lower than the QAM symbol rate, but the time constant of the filter 31 must be appropriate for the fast sample rate required.

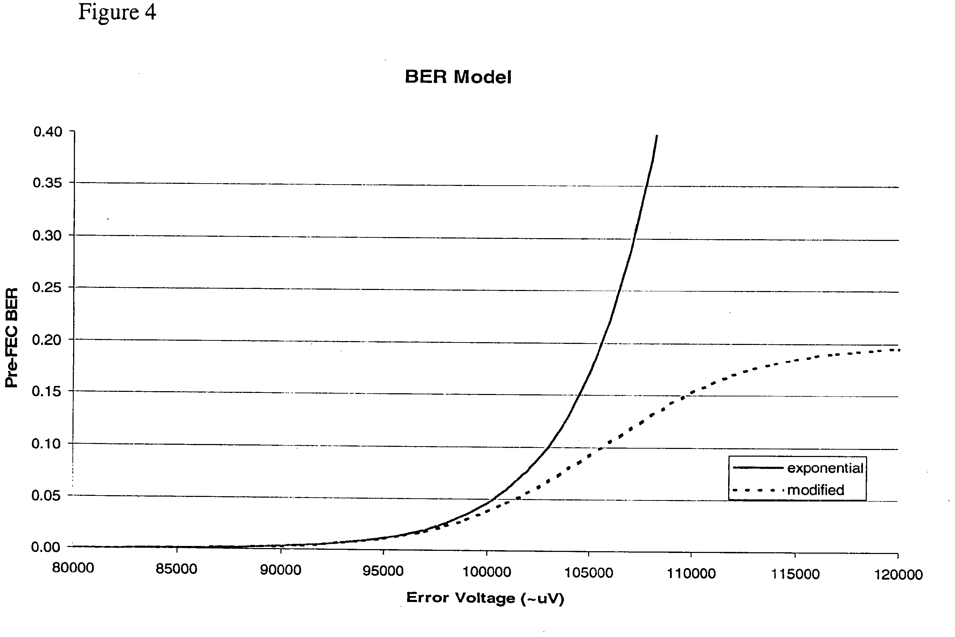

Simulations and mathematical modeling were conducted to determine a mathematical relationship between SNR (or $V_{ERR}$) to pre-FEC BER. An exponential function provides a good approximation of the relationship between the $V_{ERR}$ and the pre-FEC BER; however, fails when high $V_{ERR}$ values cause the pre-FEC BER to go over 1, as seen in Figure 4. Accordingly, in a first embodiment the pre-FEC estimated BER $f$ is computed from the scaled $V_{ERR}$ value $x$ using a modified exponential equation:

$$f(x) = \frac{c}{1 + ae^{-bx}}$$

with a>0, b>0 and 0<c<1, and preferably wherein $a = 1.42857 \times 10^{12}$, $b = 2.65 \times 10^{-4}$, and $c = 0.2$, which is graphically illustrated in Figure 4. The values of the constants a, b, and c are selected based on the specific QAM decoder hardware by analyzing data sampled with know signal impairments.

Subsequently, the post-FEC estimated BER $g$ is calculated at 34 in accordance with a predetermined statistical relationship between pre-FEC BER and post-FEC BER. Additional simulations and mathematical modeling were conducted to determine a mathematical relationship between pre-FEC BER and post-FEC BER. In a preferred embodiment, the post-FEC estimated BER $x$ is determined using the equation:

$$g(x) = xe^{-p/x^q}$$

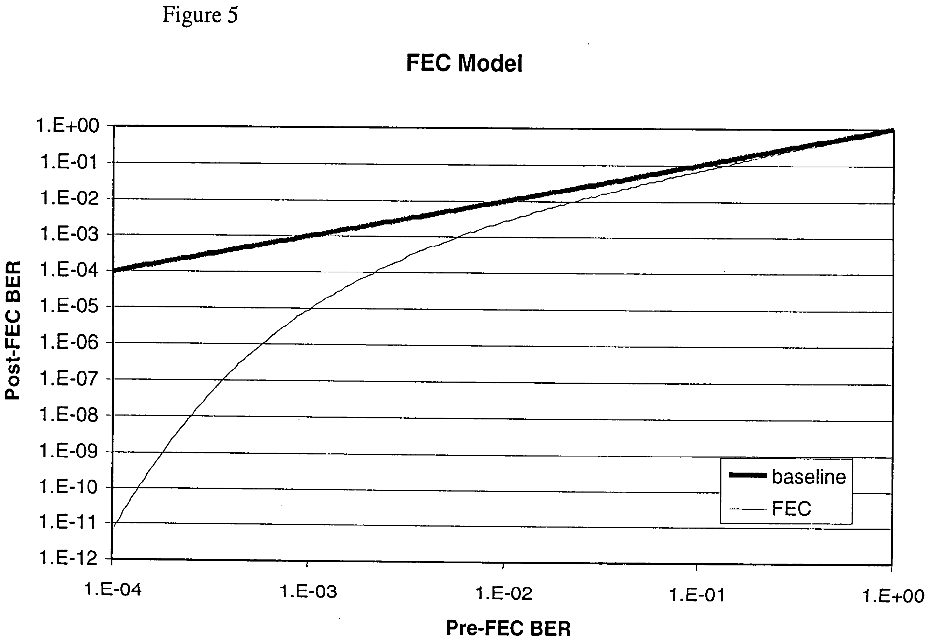

with p and q > 0, and wherein $p = 0.105277$ and $q = 0.55$, which is graphically illustrated in Figure 5. Again, the values of the constants $p$ and $q$ are selected based on the specific QAM decoder hardware by analyzing data sampled with know signal impairments.

The lowest M of N post-FEC BER estimates are averaged at 35, and deinterleaved post-FEC BER estimates are averaged at 36. The average post-FEC BER is forwarded to the scoring subsystem 3 or combined with the post-FEC BER provided by the I-Q corner analyzer 41, as hereinafter described.

FEC divides the data stream into fixed-length blocks and adds redundant data to each block in order to correct a small number of errors occurring in the transmission of the block. A noise burst often corrupts more consecutive QAM symbols than can be corrected in a single block. In order to protect the data from corruption by long noise bursts, the sender interleaves data from several blocks prior to transmitting the data. The receiver deinterleaves the data to restore the original order within the FEC blocks. Interleaving increases the burst protection capacity by multiplying the number of correctable symbols of one FEC block by the number of blocks being interleaved. The burst correction time can be computed from the symbol rate and the number of consecutive symbols that can be corrected. Interleaving does not increase the overall ratio of correctable symbols to total symbols contained within a block. As a result, interleaving to correct longer noise bursts requires that the minimum time between noise bursts also be increased. The minimum time between noise bursts is called the interleaver latency time, and can be computed from the symbol rate and the total length of all FEC blocks being interleaved. The symbols may be the same, but often the FEC symbol is 7 bits long and the QAM symbol is 6 or 8 bits long. The data is grouped into FEC symbols, then interleaved, then regrouped into QAM symbols.

The post-FEC BER model simulates the effects of interleaving by keeping a rolling history of the values from the pre to post-FEC BER block 34. Whenever block 35 receives a new value, the oldest value is discarded. During an initialization phase of the averaging step 35 of the SNR analyzer 30, values are merely accumulated; however, once N values are received, a new value is output for each new value input. The output values consist of the average of the lowest M values of the N values stored in the rolling history. Accordingly, the burst protection effects of interleaving are approximated, when used in conjunction with FEC. The values M and N are selected to approximate the burst correction capacity and latency times of the interleaver being used. M is the sample burst correction time divided by the sample period, and N is the interleaver latency time divided by the sample period.

Averaging step, illustrated by blocks 33 and 36 are conducted at a very high speed, e.g. once every 5 to 50 (or 10 to 25) microseconds, over a longer measurement interval, e.g. 0.5 to 2 seconds or more, ideally 1 second. Accordingly, overall average post and pre-FEC BER values are obtained by averaging the BER values for additive white Gaussian noise (AWGN), which provides a fairly accurate approximation for real-world impairments, especially impulse noise.

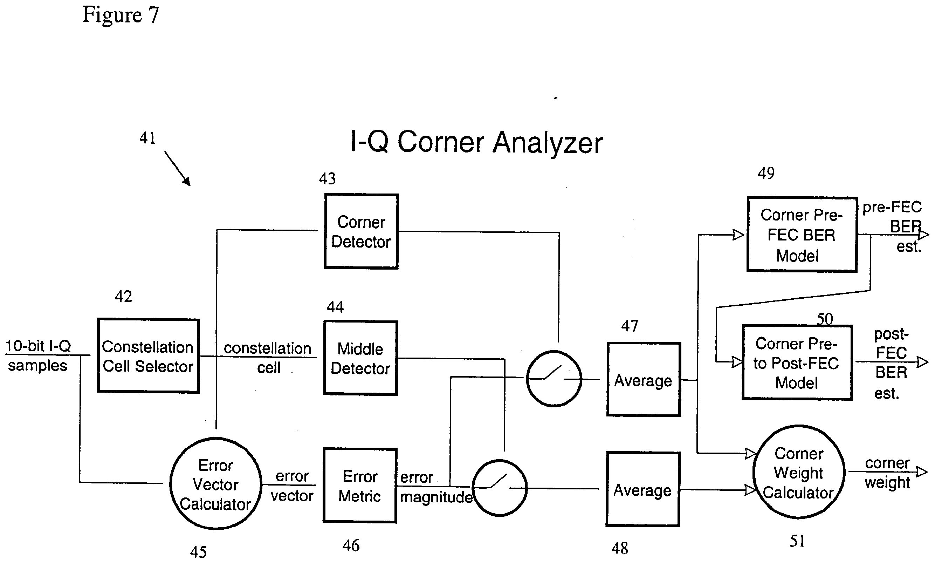

With reference to Figure 6 and 7, the BER calculator 21 preferably includes an I-Q corner analyzer 41 providing an additional means to determine the pre-FEC and the post-FEC BER values, which are combined with the aforementioned means based on the $V_{ERR}$ to obtain more accurate pre-FEC and post-FEC BER values.

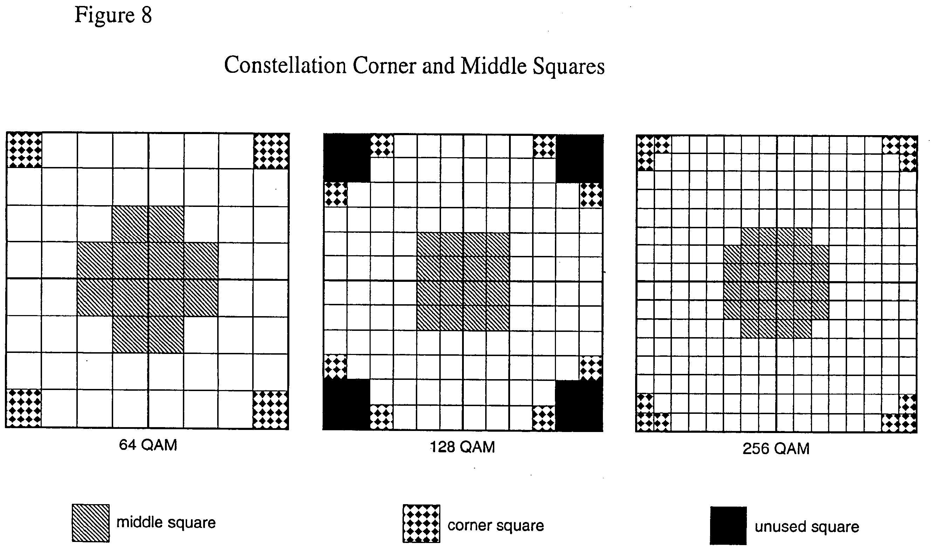

A constellation cell selector 42 of the I-Q Corner Analyzer 41 receives 10 bit I and Q signal samples once every 5 to 50 (or 10 to 25) microseconds (ideally faster dependent on sampling hardware) from the QAM demodulator 12 via signal decoder 14, identifies the grid square to which each sample belongs, and then transmits the grid square to the corner detector 43, and to the middle detector 44, which identify the samples that belong to the corner and middle regions, respectively. Examples of corner and middle squares in 64, 128 and 256 QAM constellation diagrams are illustrated in Figure 8. The middle squares comprise the 10% to 20% of the squares closest to the middle of the constellation diagram, as measured using the Euclidean distance from the center of the square to the middle of the constellation diagram i.e. 2 to 3 squares in each direction from the center, while the corner squares are the 4% to 8% of the squares farthest from the middle of the constellation diagram, e.g. the extreme corner squares of the constellation diagram and/or those squares adjacent thereto.

An error vector is calculated utilizing the 10 bit I and Q signal samples from the QAM demodulator 12 by an error vector calculator 45. An error metric is determined at 46 utilizing horizontal and vertical components of the error vector, according to the equation:

$$E = x^4 + y^4$$

where $E$ is the error magnitude and $x$ and $y$ are the horizontal and vertical components of the error vector. The error metric is computed for all grid squares in the corner and middle regions of the constellation diagram 15, as illustrated in Figure 8. Separate averages of the error metric are computed for the corner region and the middle region at 47 and 48, respectively, utilizing the error metric, every 0.5 to 2 seconds, i.e. every time a new DQI value is calculated. After averaging at 47 and 48, the average value is divided by a scale factor based on the modulation, e.g. 16 for 256 QAM, 81 for 128 QAM, and 256 for 64 QAM, to normalize the error magnitude. The aforementioned scale factors assume that I and Q have 10-bit resolution, which is a hardware dependency.

A pre-FEC BER prior to the forward error correction (FEC) is determined at 49 in accordance with a predetermined statistical relationship between the corner average error metric and pre-FEC BER. In a preferred embodiment, the corner pre-FEC BER model is a simple power function:

$$p(x) = ax^b$$

where $x$ is the corner average error metric, $p$ is the pre-FEC BER estimate, $a$ = 2.92567E-19, and $b$ = 3.14057. The values of the constants $a$ and $b$ are selected based on the specific QAM decoder hardware by analyzing data sampled with know signal impairments.

A post-FEC BER prior to the forward error correction (FEC) is determined at 50 in accordance with a predetermined statistical relationship between the pre-FEC BER and the post-FEC BER. Preferably, the pre- to post-FEC BER model is given by the equation

$$q(p) = pe^{\frac{k}{mp^r}}$$

where $p$ is the pre-FEC BER estimate, $q$ is the post-FEC BER estimate, $k$ = - 0.105277, $m$ = 12.5893, and $r$ = 0.55. The values of the constants $p$, $q$, $m$ and $k$ are selected based on the specific QAM decoder hardware by analyzing data sampled with know signal impairments.

A corner weight calculator 51 calculates a corner weight, which is preferably given by the equations

$$r = \sqrt{\max\left\{1, \frac{c}{(m + k_m)k_c}\right\}}$$

$$w = w_{max}\left(1 - \frac{1}{r}\right)$$

where $w$ is the corner weight, $c$ is the corner average error metric, and $m$ is the middle average error metric. The constants include maximum corner weight $w_{max}$ = 0.1, middle offset $k_m$ = 2100, and corner threshold $k_c$ = 1.75.

With reference to Figure 6, the BER estimates from the combined SNR (or $V_{ERR}$) and corner models for the pre-BER estimates are computed in the SNR-corner combiner 61 using the equation:

$$p(s,c,w) = \max\{s, cw + s(1 - w)\}$$

where $s$ is the SNR model BER, $c$ is the corner model BER, and $w$ is the corner weight. Similarly, the BER estimates from the combined SNR and corner models for the post-BER estimates are computed in the SNR-corner combiner 62 using the same equation.

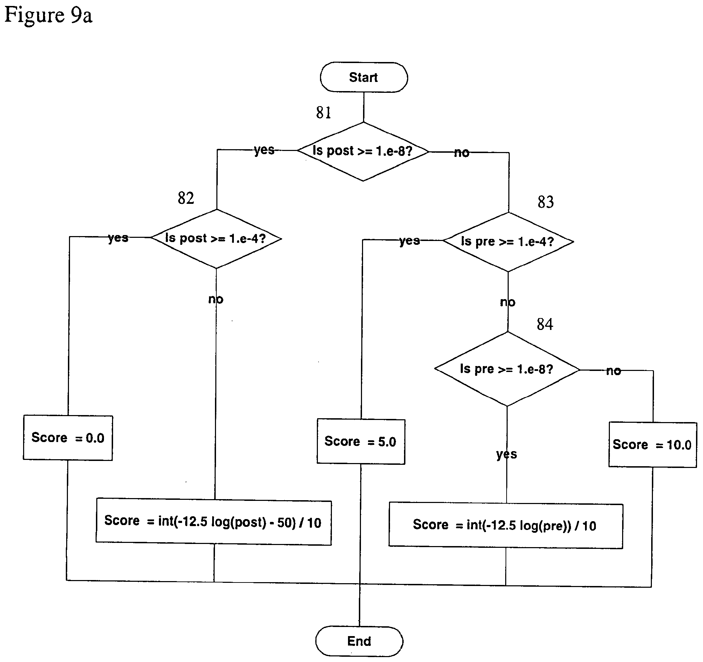

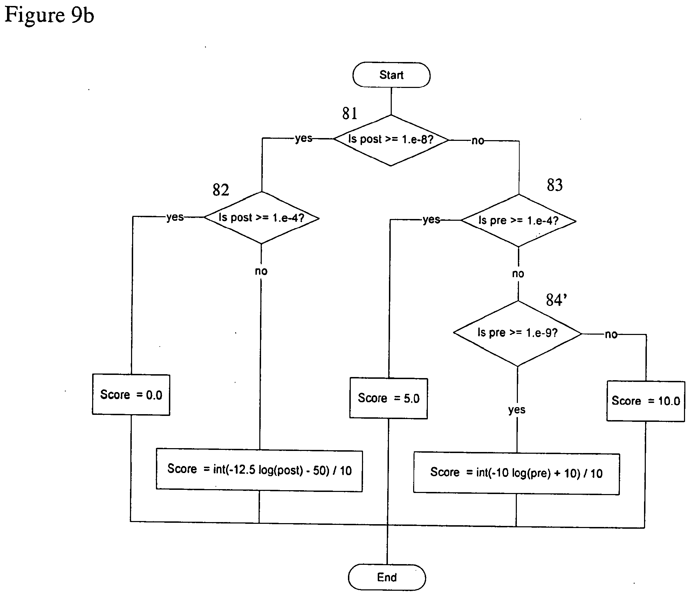

The scoring subsystem 3 receives the pre-FEC BER and the post-FEC BER estimates from the BER calculator 21, and provides them to a DQI logic measurement system 71 to determine the DQI on a predetermined scale, e.g. 1 to 5 or 0 to 10. Exemplary algorithms for the logic measurement system 71 are illustrated in Figures 9a and 9b.

With reference to Figure 9a, an initial logic box 81 determines whether the post-FEC BER is equal to or greater than a post minimum threshold, e.g. $1 \times e^{-8}$. If so, then a second logic box 82 determines whether the post-FEC BER is equal to or greater than a post maximum threshold, e.g. $1 \times e^{-4}$. If so, then the DQI score is determined to be the lowest rating, e.g. zero, on a predetermined scale, e.g. zero to ten. If not, i.e. the post-FEC BER is between the post minimum and the post maximum thresholds, then the DQI score varies, e.g. logarithmically, between the lowest rating, e.g. 0 and a middle rating, e.g. 5, and can determined by the equation:

$$DQI = int(-12.5 \log(\text{post-FEC BER})-50)/10$$

If the post-FEC BER is not equal to or greater than, i.e. is less than, the post minimum threshold, e.g. $1 \times e^{-8}$, then a third logic box 83 determines whether pre-FEC BER is equal to or greater than an prior maximum threshold, e.g. $1 \times e^{-4}$. If so, i.e. the post-FEC BER is less than the post minimum threshold, but the pre-FEC BER is greater than the prior maximum threshold, then the DQI score is the middle rating on the predetermined scale, e.g. 5.0. If not, then a fourth logic box 84 determines whether the pre-FEC BER is equal to or greater than an prior minimum threshold, e.g. 1 $x e^{-8}$. If not, i.e. the pre-FEC BER is less than the prior minimum threshold and the post-FEC BER is less than the post minimum threshold, then the DQI score is a highest rating on the predetermined scale, e.g. 10.0, but if so, i.e. the post-FEC BER is less than the post minimum threshold, but the pre-FEC BER is between the prior minimum and prior maximum thresholds, then the DQI score varies, e.g. logarithmically, between the middle rating, e.g. 5 and the highest rating, e.g. 10, and is determined by the equation:

$$DQI = int(-12.5 \log (\text{pre-FEC BER}))/10$$

In an alternate embodiment illustrated in Figure 9b, the fourth logic box 84 is replaced by a modified fourth logic box 84', which determines whether the pre-FEC BER is equal to or greater than a different prior minimum threshold, 1 $x e^{-9}$. Moreover, if the post-FEC BER is less than the post minimum threshold, but the pre-FEC BER is between the post minimum and post maximum thresholds, then the DQI score varies, i.e. logarithmically, between the middle and highest ratings, e.g. 5 and 10, and is determined by the equation:

$$DQI = int(-10 \log (\text{pre-FEC BER})+10)/10$$

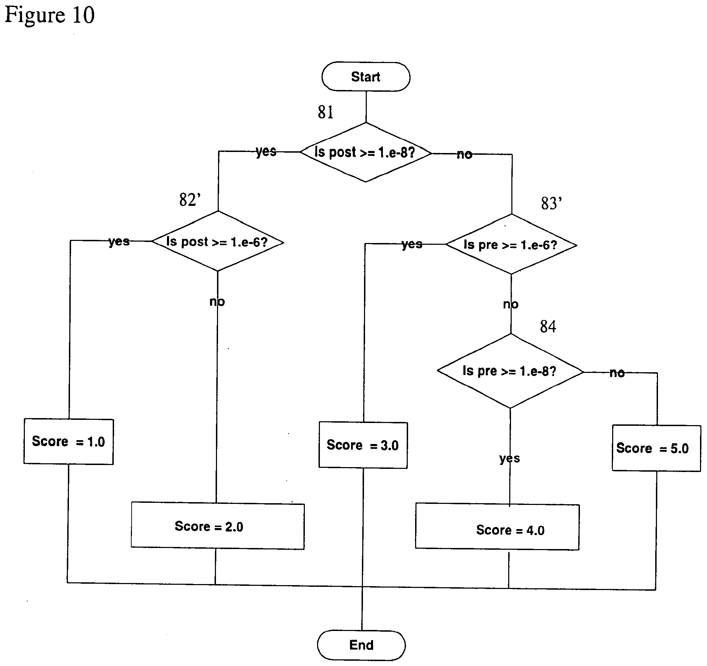

In a simplified embodiment, illustrated in Figure 10, the first logic box 81 is the same as above, but the second logic box 82 is replaced by a modified second logic box 82', which determines whether the post-FEC BER is also equal to or greater than a revised post maximum threshold, e.g. $1 \times e^{-6}$. If so, then the DQI score is the lowest rating, i.e. 1, if not, i.e. the post-FEC BER is between the post minimum and maximum thresholds, then the DQI score is between the lowest and middle ratings, i.e. 2. The third logic box 83 is also replaced by a modified third logic box 83', which determines whether the pre-FEC BER is equal to or greater than a revised prior maximum threshold, e.g. $1 \times e^{-6}$. If so, i.e. the post-FEC BER is less than the post minimum threshold, but the pre-FEC BER is greater than the prior maximum threshold, then the DQI score is the middle rating, i.e. 3, if not then the original logic box 84 is considered; however, if the pre-FEC BER is also equal to or greater than the prior minimum threshold, e.g. $1 \times e^{-8}$, then the DQI score is between the middle and highest ratings, i.e. 4, and if not, i.e. the post-FEC BER is less than the post minimum threshold and the pre-FEC BER is less that the prior minimum threshold, then the DQI score is the highest rating, i.e. 5.

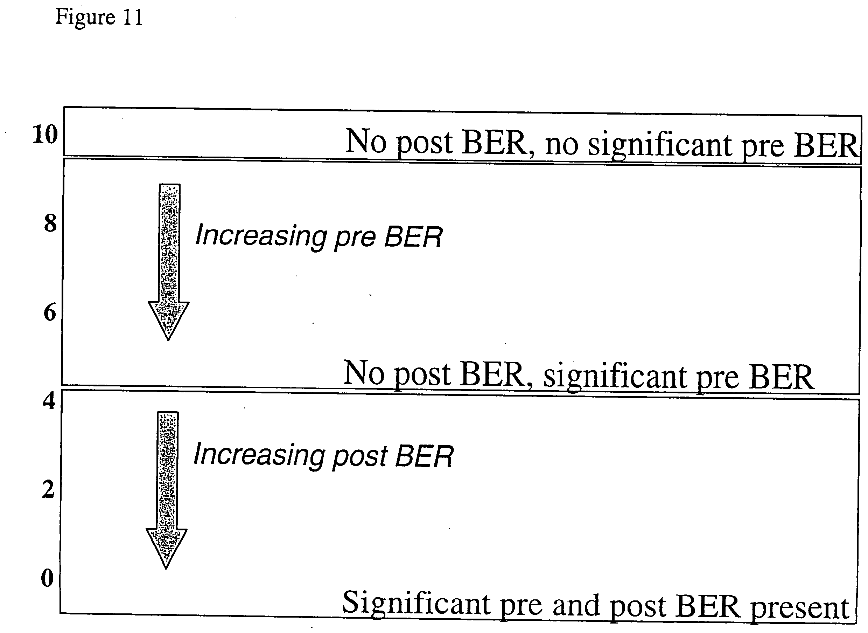

In the scoring subsystem 3 BER averages are read from the measurement subsystem 2 and scored at a rate of 1 to 2 updates per second. Figure 11 illustrates the general relationship between pre-FEC BER, post-FEC BER and the DQI score, i.e. if there is no post-FEC BER and no significant pre-FEC BER, then the DQI score would be approximately the highest rating, e.g. 10. As the pre-FEC BER increases, while the post-FEC BER remains consistently low, the DQI score ranges from near the highest to the middle rating, e.g. 9 down to 5. As the amount of post-FEC BER also increases, the DQI score decreases from the middle rating down to the lowest rating, e.g. 5 to 0, at which point, significant amounts of both pre-FEC BER and post-FEC BER are found.

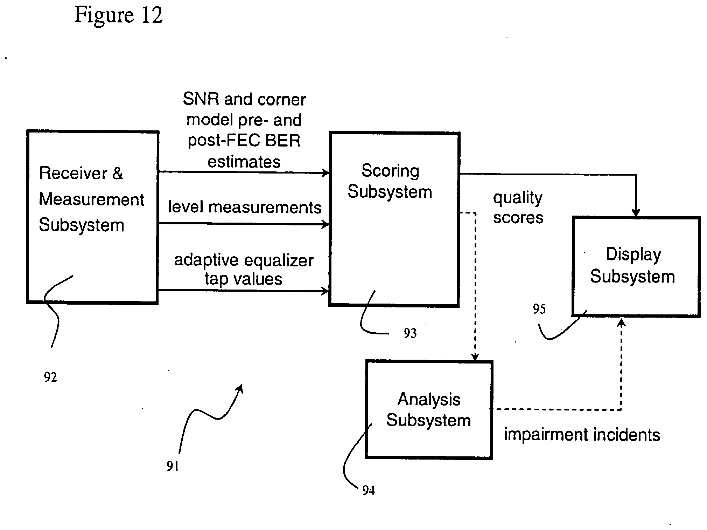

With reference to Figure 12, an enhanced DQI system 91 enables a DQI receiver and measurement system 92 to evaluate certain adverse network conditions that do not impair the QAM receiver 92, but could adversely affect consumer-grade receivers. Typically, these adverse network conditions do not affect the pre- and post-BER values coming from the receiver and measurement subsystem 92; however, the scoring subsystem 93 can be enhanced in order to use the information provided by the enhancements.

The signal level of the digital channel being tested may fluctuate when amplifiers in the network experience problems with their automatic gain control (AGC) circuitry. The degree of signal impairment varies with the amount and rate of the fluctuations. The signal level may also vary at a rate corresponding to the frequency of the AC power supply driving an amplifier, or in some cases, twice the AC power supply frequency. These variations, commonly called hum, may also introduce impairments in consumer-grade digital receivers.

The DQI scoring subsystem 93 estimates the effects of amplitude fluctuation caused by the AGC circuitry or hum and the effects of linear distortions by quantifying the degree to which each impairment is present, and adjusts, e.g. reduces, the overall DQI score by weighting factors or other means of combining the results. With these enhancements, the scoring subsystem 93 outputs individual scores for each type of impairment as well as a composite score representing overall quality.

In the enhanced receiver and measurement subsystem 92, the QAM demodulator 12 (see Fig 2) includes an adaptive equalizer component that reduces the effects of micro-reflections, group delay variations, frequency response variations, and other linear distortions of the received QAM digital signal. The adaptive equalizer contains a number of feed-forward equalization (FFE) and decision feedback equalization (DFE) taps. Each tap has an associated complex coefficient value. The demodulator 12 continually adjusts the tap values using the error information provided by each symbol decode. A typical receiver has 16 FFE and 24 DFE taps.

The receiver and measurement subsystem 92 periodically captures and outputs the instantaneous values of the tap coefficients. The tap values are updated at the same rate as the receiver and measurement subsystem 92 provides pre- and post-FEC BER values to the scoring subsystem 93.

A typical decoder chip in the equalizer enables the tap values to be read one at a time. The measurement subsystem 92 captures a complete set of the tap coefficient values representing the overall equalizer state at a point in time, by first: stopping the automatic updating of the tap values; and then by reading the values from the decoder chip sequentially. After all values are read, normal updating of the equalizer continues.

One advantage of DQI over other digital measurements is its ability to show impairments as a slight lowering of the DQI score, which would otherwise be too small to show up in a pre-FEC BER test or disrupt subscriber services. In particular, the DQI score is lowered by equalizer tap values with magnitudes that are within range, but are close to thresholds at which the equalizer would be unable to adapt.

For yet another enhancement, the receiver and measurement subsystem 92 performs signal level measurements in order to report conditions that can adversely affect the performance of consumer-grade digital receivers, but do not affect the receiver used in the DQI device 91. In order to measure signal level fluctuations, the measurement subsystem 92 determines the signal level several times during a display update period. The measurement rate must be at least four times the AC power supply frequency in order to detect and quantify hum. The signal level measurement may use any of the following means:

a) The measurement subsystem 92 reads the instantaneous gain setting of an AGC system found in the QAM decoder chip therein to determine the signal level. A lower gain indicates a higher received signal level.

b) One of the FFE taps of the adaptive equalizer is configured to be the main tap, with an imaginary value fixed at zero, whereby the mechanism used to update the tap values is adapted, so that the real value of the main tap represents the received signal level. A lower tap value indicates a higher received signal level.

c) Additional circuitry is included in the measurement subsystem 92 to measure the received signal level without disrupting the QAM decoder.

If the level measurements are performed at a fast enough rate to measure hum, the measurement subsystem 92 outputs separate values for signal level stability and for hum. In order to differentiate between them, the measurement subsystem 92 may use either filtering or a Fourier transform to identify fluctuations occurring at the AC power supply frequency or a multiple thereof.

The cable network carries additional channels with the channel under test, e.g. both analog and digital TV channels, and an ideal QAM receiver will block the additional channels, otherwise the other channels will produce inter-modulation distortions within the receiver circuitry. The amount of distortion depends on the relative level of the signal under test compared to the power levels of other signals present. If the receiver can attenuate all incoming signals in order to bring the level of the measured channel down to an acceptable level, inter-modulation distortion will be reduced.

The measurement system 92 may use any of the following methods alone or in combinations to determine the relative level of the digital channel under test:

i) tune to each channel, measure the power, and sum the results to compute the total integrated power.

ii) measure the levels of the analog TV channels present and use the highest level as a reference. Channels at lower frequencies generally have higher levels, so only those analog TV channels up to a cutoff frequency are measured.

ii) determine a tilt line based on the levels of the analog TV channels, and measure the difference in level between the digital channel under test and the height of the tilt line at the center frequency of the digital channel.

If a separate tuner is used to measure the additional channels, the measurement subsystem 92 can update the reference level periodically. If the additional channels are measured using the same tuner 11 that the QAM receiver and measurement subsystem 92 uses, the measurement subsystem 92 takes an initial reading of the additional channels before tuning to the digital channel and commencing periodic DQI measurements. DQI updates are then suspended, and the measurements of the additional channels are repeated, if the level of the measured channel changes significantly. DQI updates may also suspend, while the additional channels are measured at some predetermined calibration interval.

Pre-FEC BER values are being updated every 5 to 50 (or 10 to 25) microseconds. In addition to averaging these values every 0.5 to 2 seconds, specific frequency components can be observed by performing a Fourier transform or by using filters.

Separate outputs can be used to measure degradation caused by two specific impairments: a component occurring at the AC power supply frequency or a multiple of it can be used to indicate the presence of hum; if the sampling rate is made fast enough, e.g. 30 microseconds or less, a frequency component of 15.75 kHz can be used to indicate the presence of composite second order (CSO) or composite triple beat (CTB) impairments.

The analysis subsystem 4 identifies times of low signal quality by time of occurrence, duration and severity. Low scores occurring within a short time period can be combined into a single impairment incident, and a weighted average can be used to represent the single impairment incident. A concise summary of significant results, e.g. high DQI score, low DQI score, average DQI score, weighted average DQI score, can be determined by the analysis subsystem 4 , when DQI measurements are acquired over a long time period.

With the aforementioned enhancements, the SNR-corner combiners may be moved from the measurement subsystem 92 to the scoring subsystem 93, which enables the scoring subsystem 93 to output separate scores from each model or analyzer, as well as include their effects in the composite score. Separate scores can be output for specific impairment types:

| DQI Component Score | Supporting Measurement |
|---|---|
| Thermal noise | SNR analyzer, continuously low values |
| Impulse noise | SNR analyzer, occasional low values |
| CSO and CTB | SNR analyzer, 15.75 kHz frequency component |
| Phase noise | I-Q Corner model |
| Hum | Level fluctuations at multiples of the AC power supply frequency; SNR analyzer, components at these frequencies. |
| Signal level instability | Other level fluctuations, such as caused by amplifier AGC problems |
| Linear distortions | Equalizer tap values |
| Intermodulation | Digital channel level too low relative to the reference level |

With the enhancements, the scoring subsystem 92 may model the performance of consumer-grade QAM receivers, and use a single model, or different parameters to model the effects of specific types or makes of receivers. The parameters that could vary with the receiver type may include but are not limited to the following:

1) The amount of variation in the input signal level that is acceptable. 2) The rate of change of the input signal level that is acceptable. 3) The percent hum that is acceptable. 4) The number of FFE and DFE taps being used in the adaptive equalizer. 5) The equalizer adaptation algorithms and parameters. 6) The sensitivity of the receiver to inter-modulation distortions. 7) The AGC bandwidth. 8) The derotator bandwidth. 9) The characteristics of any bandpass or notch filter components that may be present.

The analysis subsystem 94 can track specific types of impairments using the component DQI scores, i.e. log the time of occurrence of impairments by impairment type as well as by severity and duration.

In the display subsystem 5, the DQI signal quality scores are reported numerically at readout 91, e.g. updated every 0.5 to 2 seconds, and graphically over time at display readout 92. If a specific impairment exists in the network under test, the graphical display 92 will capture a signature of the impairment. However less than 0.5 seconds and greater than 2 seconds is also possible if faster hardware is available or a slower transition is desirable. The lowest and highest DQI scores can also be displayed for a test run over a desired time period. A marker can be included in the display subsystem 95, whereby the individual component scores at the marker position can be displayed numerically. Alternatively, the impairment type receiving the lowest component score can be displayed textually. The marker can be moved a single point at a time with individual inputs, e.g. touch pad or keyboard 26, or it can be made to jump from one low point in the history to another. The display subsystems 5 and 95 can also show the status and results of other measurements occurring concurrently, e.g. signal level, MER, QAM lock status, and Interleaver depth. A written indication of how the system performed, e.g. pass/fail, excellent/good/fair/poor/no-signal, no-impairments/slight/moderate/severe, can also be displayed. The impairment incidents can be listed in order of occurrence or severity, along with their time and duration.

The DQI system provides more measurable data points than conventional BER systems, and responds faster to changing conditions. Impairments are reported before bit errors actually occur, without having to fully decode the incoming signals.

**Claims**

1. A method of determining an indication of the quality of a quadrature amplitude modulated, QAM, digital signal on a cable network with forward error correction, FEC, comprising the steps of:

   a) determining a first bit error rate, BER, of the QAM digital signal prior to FEC;
   b) determining a second BER of the QAM digital signal after FEC;
   c) determining a digital quality index, DQI, of the QAM digital signal on a predetermined scale on the basis of the first BER and the second BER; and
   d) displaying the DQI to provide an indication of the quality of the QAM digital signal on the cable network;
   **characterized in that** step a) comprises:

      i) obtaining a QAM decode error voltage, $V_{ERR}$, of the QAM digital signal from a QAM demodulator; and
      ii) determining the first BER from a scaled value of the $V_{ERR}$, x, by using a modified exponential equation,

$$f(x) = \frac{c}{1 + ae^{-bx}}$$

   wherein a, b, and c are constants based on decoding hardware, and wherein a>0, b>0, and 0<c<1, wherein the QAM decode error voltage, $V_{ERR}$, is the root mean square of the amplitude of the error vector of a received constellation point with respect to a closest valid constellation point.

2. The method according to claim 1, wherein step d) includes a plurality of DQIs over time on a graph.

3. A testing device (1, 91) for generating an indication of the quality of a quadrature amplitude modulated, QAM, digital signal on a cable network with forward error correction, FEC, comprising:

   an input port (10) for receiving the QAM digital signal;
   a first bit error rate, BER, generating means (21) for determining a first BER of the QAM digital signal prior to FEC;
   a second BER generating means (21) for determining a second BER of the QAM digital signal after FEC;
   a digital quality index, DQI, generating means (3, 93) for determining a DQI of the QAM digital signal on a predetermined scale on the basis of the first BER and the second BER; and a display (5, 95) for displaying the DQI to provide an indication of the quality of the QAM digital signal on the cable network;
   **characterized in that** the first BER generating means (21) comprises:

      a QAM demodulator (12, 31) for providing a QAM decode error voltage, $V_{ERR}$, of the QAM digital signal; and
      a first logic means (32) for determining the first BER from a scaled value of the $V_{ERR}$, x, by using a modified exponential equation,

$$f(x) = \frac{c}{1 + ae^{-bx}}$$

   wherein a, b, and c are constants based on decoding hardware, and wherein a>0, b>0, and 0<c<1, wherein the QAM decode error voltage, $V_{ERR}$, is the root mean square of the amplitude of the error vector of a received constellation point with respect to a closest valid constellation point.

4. The testing device of claim 3, wherein DQIs over time are displayed on a graph in the display.

**Patentansprüche**

1. Ein Verfahren zum Bestimmen einer Angabe der Qualität eines digitalen Quadrat-Amplituden-Modulation-Signals, QAM-Signals, in einem Kabelnetz mit Vorwärtsfehlerkorrektur, FEC (Forward Error Correction), das die folgenden Schritte beinhaltet:

   a) Bestimmen einer ersten Bitfehlerrate, BER (Bit Error Rate), des digitalen QAM-Signals vor der FEC;
   b) Bestimmen einer zweiten BER des digitalen QAM-Signals nach der FEC;
   c) Bestimmen eines digitalen Qualitätsindex, DQI, des digitalen QAM-Signals auf einer vorbestimmten Skala auf der Basis der ersten BER und der zweiten BER; und
   d) Anzeigen des DQI, um eine Angabe der Qualität des digitalen QAM-Signals in dem Kabelnetz bereitzustellen;
   **dadurch gekennzeichnet, dass** Schritt a) Folgendes beinhaltet:

   i) Erhalten einer QAM-Decodierfehlerspannung, $V_{ERR}$, des digitalen QAM-Signals von einem QAM-Demodulator; und
   ii) Bestimmen der ersten BER aus einem skalierten Wert der $V_{ERR,\,x}$, unter Verwendung einer modifizierten Exponentialgleichung,

$$f(x) = \frac{c}{1 + ae^{-bx}}$$

   wobei a, b und c Konstanten sind, die auf der Decodierhardware basieren, und wobei a > 0, b > 0 und 0 < c < 1 sind,
   wobei die QAM-Decodierfehlerspannung, $V_{ERR}$, das quadratische Mittel der Amplitude des Fehlervektors eines empfangenen Konstellationspunkts in Bezug auf einen nächsten gültigen Konstellationspunkt ist.

2. Verfahren gemäß Anspruch 1, wobei Schritt d) eine Vielzahl von DQI im Zeitverlauf in einem Diagramm umfasst.

3. Eine Testvorrichtung (1, 91) zum Erzeugen einer Angabe der Qualität eines digitalen Quadrat-Amplituden-Modulation-Signals, QAM-Signals, in einem Kabelnetz mit Vorwärtsfehlerkorrektur, FEC, die Folgendes beinhaltet:

   einen Eingangsport (10) zum Empfangen des digitalen QAM-Signals;
   ein erstes Bitfehlerrate-Erzeugungsmittel, BER-Erzeugungsmittel, (21) zum Bestimmen einer ersten BER des digitalen QAM-Signals vor der FEC;
   ein zweites BER-Erzeugungsmittel (21) zum Bestimmen einer zweiten BER des digitalen QAM-Signals nach der FEC;
   ein Digitalqualitätsindex-Erzeugungsmittel, DQI-Erzeugungsmittel, (3, 93) zum Bestimmen eines DQI des digitalen QAM-Signals auf einer vorbestimmten Skala basierend auf der ersten BER und der zweiten BER; und
   eine Anzeige (5, 95) zum Anzeigen des DQI zur Bereitstellung einer Angabe der Qualität des digitalen QAM-Signals im Kabelnetz;
   **dadurch gekennzeichnet, dass** das erste BER-Erzeugungsmittel (21) Folgendes beinhaltet:

   einen QAM-Demodulator (12, 31) zum Bereitstellen einer QAM-Decodierfehlerspannung, $V_{ERR}$, des digitalen QAM-Signals; und
   ein erstes Logikmittel (32) zum Bestimmen der ersten BER aus einem skalierten Wert der $V_{ERR,\,x}$, unter Verwendung einer modifizierten Exponentialgleichung,

$$f(x) = \frac{c}{1 + ae^{-bx}}$$

   wobei a, b und c Konstanten sind, die auf der Decodierhardware basieren, und wobei a > 0, b > 0 und 0 < c < 1 sind,

wobei die QAM-Decodierfehlerspannung, $V_{ERR}$, das quadratische Mittel der Amplitude des Fehlervektors eines empfangenen Konstellationspunkts in Bezug auf einen nächsten gültigen Konstellationspunkt ist.

**4.** Testvorrichtung gemäß Anspruch 3, wobei die DQI im Zeitverlauf in einem Diagramm auf der Anzeige angezeigt werden.

**Revendications**

**1.** Un procédé de détermination d'une indication de la qualité d'un signal numérique à modulation d'amplitude en quadrature, QAM, sur un réseau câblé avec une correction d'erreur sans voie de retour, FEC, comprenant les étapes consistant à :

a) déterminer un premier taux d'erreur binaire, BER, du signal numérique QAM préalablement à la FEC ;
b) déterminer un deuxième BER du signal numérique QAM après la FEC ;
c) déterminer un indice de qualité numérique, DQI, du signal numérique QAM sur une échelle prédéterminée sur la base du premier BER et du deuxième BER ; et
d) afficher le DQI pour fournir une indication de la qualité du signal numérique QAM sur le réseau câblé ;
**caractérisé en ce que** l'étape a) comprend :

i) l'obtention d'une tension d'erreur de décodage QAM, $V_{ERR}$, du signal numérique QAM à partir d'un démodulateur QAM ; et
ii) la détermination du premier BER à partir d'une valeur à l'échelle de la $V_{ERR}$, $_X$, à l'aide d'une équation exponentielle modifiée,

$$f(x) = \frac{c}{1 + ae^{-bx}}$$

dans laquelle a, b, et c sont des constantes basées sur le matériel informatique de décodage, et dans laquelle a > 0, b > 0, et 0 < c < 1,
dans lequel la tension d'erreur de décodage QAM, $V_{ERR}$, est la moyenne quadratique de l'amplitude du vecteur d'erreur d'un point de constellation reçu par rapport à un point de constellation valide le plus proche.

**2.** Le procédé selon la revendication 1, dans lequel l'étape d) inclut une pluralité de DQI dans le temps sur un graphique.

**3.** Un dispositif d'essai (1, 91) pour générer une indication de la qualité d'un signal numérique à modulation d'amplitude en quadrature, QAM, sur un réseau câblé avec une correction d'erreur sans voie de retour, FEC, comprenant :

un port d'entrée (10) pour recevoir le signal numérique QAM ;
un moyen de génération (21) de premier taux d'erreur binaire, BER, pour déterminer un premier BER du signal numérique QAM préalablement à la FEC ;
un moyen de génération (21) de deuxième BER pour déterminer un deuxième BER du signal numérique QAM après la FEC ;
un moyen de génération (3, 93) d'indice de qualité numérique, DQI, pour déterminer un DQI du signal numérique QAM sur une échelle prédéterminée sur la base du premier BER et du deuxième BER ; et un affichage (5, 95) pour afficher le DQI pour fournir une indication de la qualité du signal numérique QAM sur le réseau câblé ;
**caractérisé en ce que** le moyen de génération (21) de premier BER comprend :

un démodulateur QAM (12, 31) pour fournir une tension d'erreur de décodage QAM, $V_{ERR}$, du signal numérique QAM ; et
un premier moyen logique (32) pour déterminer le premier BER à partir d'une valeur à l'échelle de la $V_{ERR}$, $_X$, à l'aide d'une équation exponentielle modifiée,

$$f(x) = \frac{c}{1 + ae^{-bx}}$$

dans laquelle a, b, et c sont des constantes basées sur le matériel informatique de décodage, et dans laquelle a > 0, b > 0, et 0 < c < 1,

dans lequel la tension d'erreur de décodage QAM, $V_{ERR}$, est la moyenne quadratique de l'amplitude du vecteur d'erreur d'un point de constellation reçu par rapport à un point de constellation valide le plus proche.

4. Le dispositif d'essai de la revendication 3, dans lequel les DQI dans le temps sont affichés sur un graphique dans l'affichage.

Figure 1

Measurement Subsystem —pre-FEC BER→ Scoring Subsystem
post-FEC BER

quality score

Display Subsystem

Analysis Subsystem

impairment incidents

EP 1 968 270 B1

Figure 2

Figure 3

SNR Analyzer

fast filter — 31

filtered SNR samples

Pre-FEC BER model — 32

30

pre-FEC BER estimates

Average — 33

pre-FEC BER estimates

Pre- to Post-FEC BER model — 34

post-FEC BER estimates

Average of lowest M of N — 35

deinterleaved BER estimates

Average — 36

post-FEC BER estimates

EP 1 968 270 B1

Figure 4

**BER Model**

Pre-FEC BER

Error Voltage (~uV)

— exponential
···· modified

Figure 5

**FEC Model**

## Figure 6

## Statistical Model for Approximating BER

Figure 7

## I-Q Corner Analyzer

EP 1 968 270 B1

## Figure 8

### Constellation Corner and Middle Squares

64 QAM   128 QAM   256 QAM

middle square   corner square   unused square

EP 1 968 270 B1

Figure 9a

```
                            Start

                  81          │
                    ┌─────────┴─────────┐
        ──yes───────│  Is post >= 1.e-8? │──no──────────┐
        │           └─────────┬─────────┘               │
   82   │                                          83   │
  ┌─────┴──────┐                              ┌─────────┴──────┐
yes│ Is post >= 1.e-4?│                      yes│ Is pre >= 1.e-4? │
  └─────┬──────┘                              └────────┬───────┘
        │no                                            │no
        │                                         84   │
        │                                   ┌──────────┴──────┐
        │                                   │ Is pre >= 1.e-8? │──no──┐
        │                                   └────────┬────────┘      │
┌──────────────┐          ┌──────────────┐          │yes      ┌──────────────┐
│ Score  = 0.0 │          │ Score  = 5.0 │                     │ Score  = 10.0│
└──────┬───────┘          └──────┬───────┘                     └──────┬───────┘
       │     ┌──────────────────────────────────┐  ┌──────────────────────────────────┐
       │     │ Score  = int(-12.5 log(post) - 50) / 10 │  │ Score  = int(-12.5 log(pre)) / 10 │
       │     └──────────────────────────────────┘  └──────────────────────────────────┘

                            End
```

EP 1 968 270 B1

Figure 9b

Figure 10

Figure 11

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050144648 A, Gotwals
- US 20050281200 A, Terreault
- US 20050286436 A, Flask
- US 20050286486 A, Miller
- US 6611795 B, Cooper
- US 7032159 B, Lusky
- US 20030179821 A, Lusky
- WO 2006085275 A, Moulsley
- US 20040131017 A, Penther
- US 2002069038 A, Cooper

**Non-patent literature cited in the description**

- DSAM-6000 Digital Service Analysis Meter Key Features. *JDS Uniphase,* 2006